# FASCICULE DE BREVET EUROPEEN

(11) **EP 2 597 427 B1**
(45) Date de publication et mention de la délivrance du brevet: **30.11.2016**
(21) Numéro de dépôt: 12306248.1
(22) Date de dépôt: 12.10.2012
(51) Int. Cl.: G01D 5/00, H01H 3/02, G01D 5/04, G01D 5/12, H01H 71/52, H01H 71/70

(54) **Procédé d'évaluation des performances mécaniques d'un appareil de coupure et appareil de coupure pour la mise en oeuvre dudit procédé**
Verfahren zur Evaluierung der mechanischen Performance eines Schaltgerätes und Schaltgerät zur Implementierung des Verfahrens
Method for evaluating the mechanical performances of a switchgear apparatus and switchgear apparatus for implementation of said method

(30) Priorité: 28.11.2011 FR 1103620
(43) Date de publication de la demande: 29.05.2013
(73) Titulaire: Schneider Electric Industries SAS, 92500 Rueil-Malmaison (FR)
(72) Inventeur: Cazals, François, 38050 GRENOBLE Cedex 9 (FR); Nereau, Jean-Pierre, 38050 GRENOBLE Cedex 9 (FR)
(74) Mandataire: Tripodi, Paul

(56) Documents cités:
- EP-A1- 0 222 645
- EP-A1- 0 789 380
- DE-A1- 19 504 714

## Description

### DOMAINE TECHNIQUE DE L'INVENTION

L'invention concerne un procédé d'évaluation des performances mécaniques d'un appareil de coupure comprenant au moins un pôle. Chaque pôle comprend une paire de contacts principaux mobiles l'un par rapport à l'autre entre une position ouverte et une position fermée. Un mécanisme d'entraînement d'un bras de support d'un premier contact principal comprend un arbre des pôles rotatif et au moins une tringle couplant de façon pivotante le mécanisme d'entrainement au bras de support. Ledit mécanisme comprenant un système accumulateur d'énergie apte à entrainer un déplacement dudit bras pour placer les contacts principaux dans une position fermée.

L'invention est aussi relative à un appareil de coupure pour la mise en oeuvre du procédé dudit procédé.

### ETAT DE LA TECHNIQUE

Une ligne d'alimentation d'une charge électrique à commander est classiquement dotée d'au moins un appareil de coupure qui comprend, pour chaque phase, des paires de contacts mobiles relativement l'un à l'autre afin de commuter la charge. L'actionnement des contacts peut être effectué de différentes manières ; en particulier, pour certains appareils de coupure de forte puissance (notamment supérieure à 600 A), utilisés par exemple en sécurité en tête de ligne, une tenue électrodynamique élevée est nécessaire et les contacts sont entraînés par un système de levier couplé à un axe rotatif, lui-même actionné par un mécanisme à genouillère à deux bielles pivotantes, comme par exemple décrit dans EP 0 222 645, EP 0 789 380, EP 1 347479 et DE 195 04 714.

Une cause de dysfonctionnement des appareils de coupure connus concerne le mécanisme d'actionnement à genouillère précédemment décrit. Ce mécanisme d'actionnement appelé aussi mécanisme OFO (ouverture-fermeture-ouverture), est mis en mouvement par un actionneur mécanique à ressorts. Ce mécanisme à ressort appelé aussi mécanisme à « grenade » est ainsi utilisé pour assurer la fermeture du disjoncteur. Ce mécanisme à « grenade » apporte l'énergie nécessaire au mécanisme OFO et permet aussi à un opérateur de manoeuvrer l'appareil de coupure en toute sécurité. En effet son utilisation limite les risques d'exposition liée à la présence d'arc électrique en cas de mauvaise fermeture. Le disjoncteur comporte généralement un moteur de réarmement du mécanisme à « grenade ». Ledit moteur est actionné dès que la fin de phase de fermeture du mécanisme OFO pour armer le mécanisme à « grenade ».

Ce mécanisme à « grenade » peut présenter des défauts de fonctionnement au cours de son utilisation dans le temps. Une baisse des performances énergétiques du mécanisme à « grenade » risque d'être responsable de fermeture incomplète du mécanisme OFO. Les raisons du dysfonctionnement du mécanisme « grenade » sont diverses. Elles peuvent être notamment liées à un avachissement des ressorts du mécanisme à « grenade », une augmentation des frottements mécaniques de la chaine cinématique des différentes pièces en mouvement dans le disjoncteur, une augmentation du couple résistant sur le barreau du disjoncteur.

Si l'action du mécanisme à « grenade » n'est pas suffisante pour manoeuvrer le mécanisme OFO, l'appareil de coupure peut toute de même se retrouver dans une position fermée tout en n'étant pas verrouillé. En effet, la genouillère du mécanisme OFO se déplie sous l'action de la « grenade » mais ne franchit pas son point mort de fonctionnement. Le disjoncteur est alors fermé tout en n'étant pas verrouillé et peut être traversé par un courant. Dans cette dernière position, le mécanisme à « grenade » assure le maintien du mécanisme OFO dans une position de fermeture, alors que dans un fonctionnement dit « normal », le mécanisme OFO doit se verrouiller de manière autonome sur une butée. Dans le cas particulier de réalisation décrit, le passage du point mort du mécanisme à genouillère assure la mise en butée du mécanisme OFO dans la position fermée. Si l'appareil de coupure se trouve dans un état fermé non verrouillé et que le moteur de réarmement est actionné, le disjoncteur se retrouve alors dans une phase dite d'ouverture lente, phase qui est totalement à proscrire. En effet, le mécanisme OFO n'étant plus maintenu par le mécanisme à « grenade » en cours de réarmement, ledit mécanisme OFO tend à s'ouvrir de manière spontanée. Un arc électrique peut alors apparaitre et représenter un risque pour le disjoncteur en provoquant son « explosion ».

### EXPOSE DE L'INVENTION

L'invention vise donc à remédier aux inconvénients de l'état de la technique, de manière à proposer un procédé de diagnostic procédé d'évaluation des performances mécaniques d'un appareil de coupure, notamment du mécanisme à ressort assurant la fermeture du mécanisme d'actionnement OFO.

Le procédé selon l'invention consiste à mesurer l'angle de rotation de l'arbre des pôles pendant une durée de fermeture des contacts et reconstituer à partir des mesures au moins deux valeurs spécifiques. Lesdites valeurs spécifiques sont ensuite comparer à un gabarit de fonctionnement initial spécifique de dispositif de coupure pour diagnostiquer les performances mécaniques d'usure du mécanisme d'entraînement en fonction d'un état comparatif entre les valeurs spécifiques obtenues et celles du gabarit de fonctionnement.

Selon un mode préférentiel de réalisation de l'invention, le procédé consiste à déterminer une première valeur spécifique égale à un premier temps nécessaire pour atteindre un premier point d'inflexion sur une courbe d'évolution de l'angle de rotation. Ledit point d'inflexion correspond au moment où l'arbre des pôles atteint une vitesse maximale de rotation. Une seconde valeur spécifique égale à un second temps nécessaire pour atteindre un point sur la courbe d'évolution est déterminée. Ce second point correspond à un angle de rotation final théorique atteint lorsque la paire de contacts est dans une position fermée. Le temps écoulé entre le premier et second temps est calculé pour diagnostiquer un niveau d'énergie excédentaire du système accumulateur d'énergie du mécanisme d'entraînement en fonction de la différence entre la valeur du temps écoulé calculée et à une valeur théorique.

Selon un mode particulier de réalisation de l'invention, le procédé consiste déterminer une troisième valeur spécifique sur une courbe d'évolution de l'angle de rotation correspondant à un temps pour atteindre un premier maximum local sur la courbe d'évolution. Ledit premier maximum local correspond à l'angle de rotation maximal atteint par l'arbre des pôles 20 au cours de la fermeture. Une quatrième valeur spécifique sur la courbe d'évolution de l'angle de rotation est déterminée et correspond à un angle de rotation final atteint lorsque la paire de contacts principaux mobiles est dans une position fermée. La différence angulaire entre l'angle de rotation maximal et angle de rotation final est calculée pour diagnostiquer un état de verrouillage d'un dispositif à genouillère du mécanisme d'entraînement de l'arbre des pôles en fonction de ladite différence angulaire.

L'appareil de coupure pour la mise en oeuvre du procédé est défini dans les revendications. Il comprend une paire de contacts mobiles l'un par rapport à l'autre entre une position ouverte et une position fermée. Un mécanisme d'entraînement du bras de support d'un premier contact comprenant un arbre des pôles (20) rotatif et au moins une tringle qui couplant de façon pivotante le mécanisme d'entrainement au bras de support. Un système accumulateur d'énergie est apte à entrainer un déplacement dudit bras pour placer les contacts principaux dans une position fermée. L'appareil de coupure comprend une pluralité de pôles identiques et un arbre des pôles commun à tous les pôles, l'arbre des pôles étant l'axe rotatif des mécanismes d'entraînement.

De préférence, le bras de support comprend une première partie portant le premier contact et une deuxième partie, les deux parties coulissant l'une par rapport à l'autre de sorte que, en position fermée de la paire de contacts, la deuxième partie puisse prendre une première position d'accostage et une deuxième position de fin de course dans laquelle la première partie est enfoncée dans la deuxième partie.

Selon un mode de développement de l'appareil de coupure, le mécanisme d'entraînement de l'arbre des pôles comporte un dispositif de réarmement ayant un système accumulateur d'énergie à dispositif élastique comprenant au moins un ressort de fermeture pour déplacer le contact mobile vers la position de fermeture, l'armement du ressort de fermeture étant opéré par une came de réarmement entraînée en rotation au moyen d'un levier manuel ou d'un servomoteur.

De préférence, le mécanisme d'entraînement de l'arbre des pôles comporte un dispositif à genouillère associé à un crochet de déclenchement et à un ressort d'ouverture pour déplacer le bras de support du contact mobile, le dispositif comporte deux bielles.

Appareil de coupure comporte des moyens de détermination de l'angle de rotation de l'arbre des pole, lesdits moyens comprenant un capteur de rotation dont un composant est disposé sur l'arbre des pôles.

Selon un mode particulier de réalisation, le capteur de rotation comprend des moyens magnétiques disposés sur l'axe de rotation et des moyens de détection mis en place sur le boîtier de l'appareil de coupure, les moyens magnétiques et de détection communiquant sans contact.

Selon un mode particulier de réalisation, le capteur de rotation comprend une roue dentée disposée sur l'axe de rotation et des moyens de détection mis en place sur le boîtier de l'appareil de coupure, la roue dentée et moyens de détection communiquant sans contact.

### BREVE DESCRIPTION DES FIGURES

D'autres avantages et caractéristiques ressortiront plus clairement de la description qui suit de modes particuliers de réalisation de l'invention, donnés à titre illustratif et nullement limitatifs, représentés dans les figures annexées.
La figure 1 illustre un appareil de coupure pour la mise en oeuvre du procédé selon l'invention ;
La figure 2 représente une vue de détail en perspective du mécanisme d'actionnement d'un appareil de coupure selon la figure 1 ;
La figure 3 représente une autre vue de détail en perspective du mécanisme d'actionnement d'un appareil de coupure selon la figure 1 ;
La figure 4 représente une vue de détail en perspective du capteur de rotation 70 d'un appareil de coupure selon la figure 1 ;
Les figures 5A - 5E montrent d'un mécanisme d'actionnement selon la figure 2 au cours des étapes de fermeture ;
La figure 6 représente un capteur utilisé dans un mode particulier de réalisation de l'invention ;
La figure 7 représente une courbe d'évolution de l'angle de rotation de l'arbre des pôles porte contact du mécanisme d'actionnement en cours de fermeture.

### DESCRIPTION DETAILLEE D'UN MODE DE REALISATION PREFERE

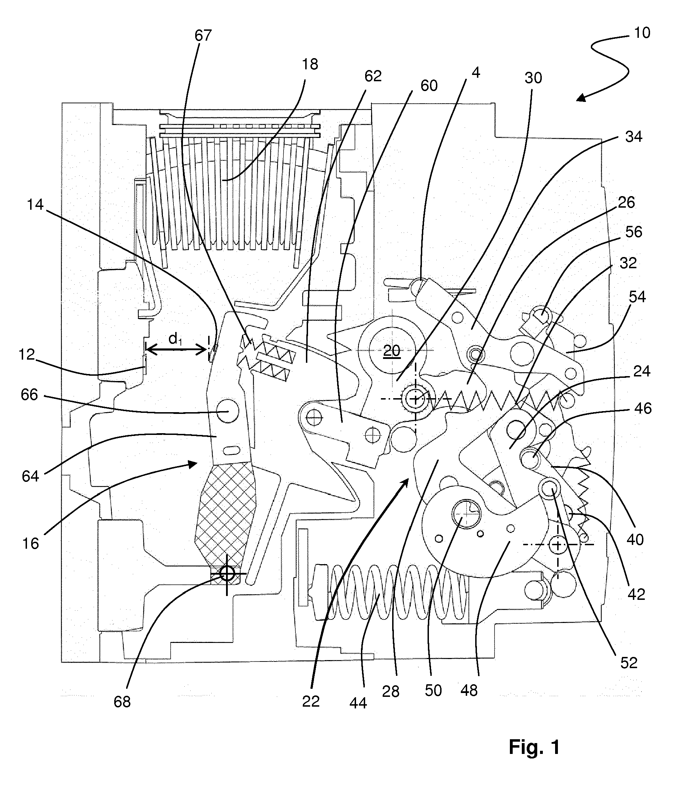

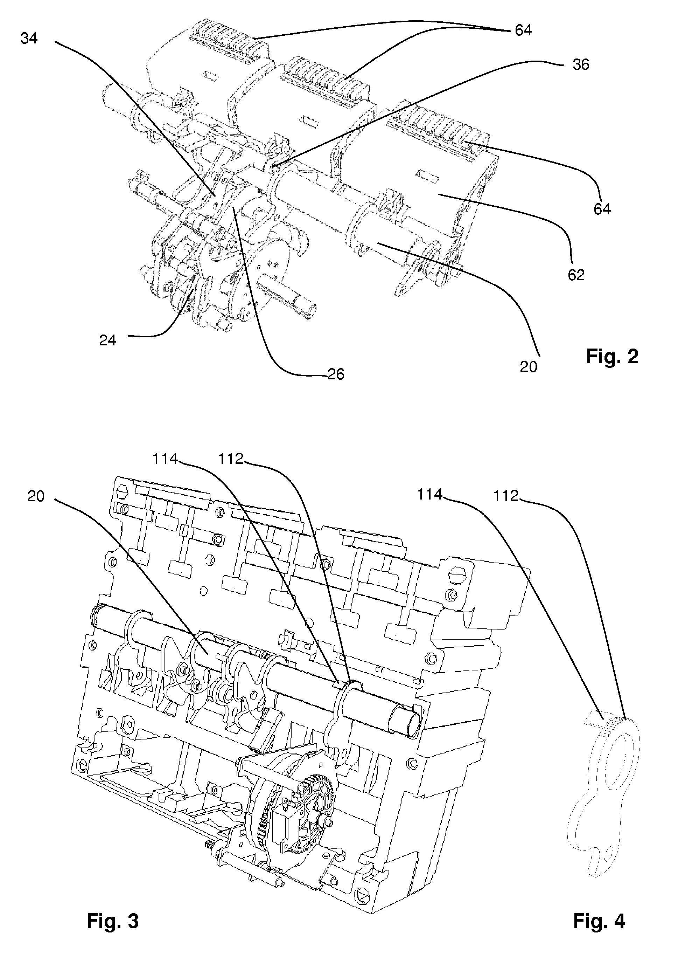

En référence à la figure 1, un appareil de coupure 10 à fortes intensités, supérieures à 600 A, comporte, pour chaque pôle et de manière classique, une paire de contacts 12, 14 électriques. Chaque contact électrique est de préférence associé à une pastille de matériau approprié, par exemple en alliage argenté. Un des contacts 14 est monté sur un bras 16 pivotant entre une position d'ouverture dans laquelle il est éloigné du contact fixe 12, et une position de fermeture dans laquelle le contact mécanique et électrique entre les contacts 12, 14 est établi. Le pôle comporte également une chambre d'extinction d'arc 18 et une paire de bornes principales (non illustrée) destinées à venir s'embrocher sur des plages de raccordement. Pour ces gammes élevées, l'appareil de coupure 10 comporte une pluralité de pôles disposés dans des plans parallèles, perpendiculaires à un arbre des pôles 20 qui leur est commun : l'ordre de fermeture ou d'ouverture des pôles est transmis à chaque contact mobile 14 depuis l'arbre des pôles 20 par l'intermédiaire d'un mécanisme d'entraînement 22 à levier (figure 2).

L'arbre des pôles 20 est monté à rotation sur le boîtier de l'appareil de coupure 10 et actionné par des moyens appropriés. En particulier, pour les appareils de coupure 10 ouverts avec arbre des pôles 20 intermédiaire et forte tenue électrodynamique, le mécanisme d'entraînement 22 est du type à genouillère, avec deux biellettes 24, 26 pivotant l'une par rapport à l'autre. L'une des biellettes 24 est articulée en rotation sur un crochet de déclenchement 28 monté pivotant sur un axe fixe ; l'autre biellette 26 est accouplée mécaniquement à une manivelle 30 de l'arbre des pôles 20, elle aussi commune à l'ensemble des pôles et formant par ailleurs l'un des leviers du mécanisme d'entraînement 22 des contacts électriques.

Un ressort d'ouverture 32 est ancré entre la manivelle 30 et un taquet fixe de retenue, et tend à rappeler la manivelle 30 vers sa position d'ouverture. Un cliquet d'ouverture 34, formé par un levier pivotant autour d'un axe fixe, est piloté par un verrou d'ouverture 36 en forme de demi-lune ; le cliquet d'ouverture 34 est rappelé par un ressort vers le crochet de déclenchement 28, en s'éloignant de la demi-lune 36. Un galet est ménagé sur le cliquet d'ouverture 34 entre ses extrémités pour coopérer avec un évidement en forme de V du crochet de déclenchement 28, qui est rappelé par un ressort (non illustré) tendant à raccourcir la distance entre l'axe d'articulation du mécanisme à genouillère 24, 26 sur le crochet de déclenchement 28 et l'axe d'articulation du mécanisme à genouillère sur la manivelle 30.

Dans un mode de réalisation préféré, l'appareil de coupure 10 est apte à être réarmé, c'est-à-dire qu'il est muni d'un accumulateur d'énergie de façon à assister la fonction de fermeture, tel que par exemple un mécanisme à « grenade » tel décrit dans le document EP 0 222 645. En particulier, un levier entraîneur 40 est monté pivotant autour d'un axe fixe 42, et un dispositif élastique d'accumulation d'énergie comprenant au moins un ressort de fermeture 44 est monté pivotant sur un point fixe et à un doigt du levier entraîneur 40. Le levier entraîneur 40 porte un galet 52 destiné à coopérer avec une came d'armement 48 clavetée sur un arbre 50. Le galet 52 est apte à coopérer avec un cliquet de fermeture 54 pivotant autour d'un axe fixe. Un verrou de fermeture 56, apte à verrouiller le cliquet 54, est rappelé élastiquement par un ressort vers sa position de fermeture ; le cliquet 54 est lui-même rappelé par un ressort vers sa position verrouillée.

L'arbre des pôles 20 est actionné par l'intermédiaire de ces différents éléments et entraîne alors les contacts mobiles 14. A cette fin, sa manivelle 30 est munie, pour chaque pôle, d'une tringle de liaison 60 qui la relie au bras de support 16 du contact mobile 14. Le bras de support 16 est muni de deux parties coulissantes l'une par rapport à l'autre : une cage de pôles 62 est déplacée directement par la tringle 60 par rapport à laquelle elle est montée pivotante. La partie 64 du bras 16 qui porte la pastille de contact 14 coulisse à l'intérieur de la cages de pôles 62, de préférence de façon articulée autour d'un axe 66 ; des moyens faisant ressort 67, par exemple un ou plusieurs ressorts de pression de contact, agencés entre le support 64 et la cages de pôles 62 sollicitent la pastille 14 en position saillante par rapport à la cage. Cette configuration permet une sur-course de fermeture de la pastille de contact 14 par rapport à l'accostage, de sorte qu'en position de passage du courant entre les contacts 12, 14, la cage de pôles 62 peut poursuivre son mouvement sans accentuer la pression sur les pastilles des contacts12, 14. Le bras 16 est ainsi monté à pivotement par sa cage 62 autour d'un premier axe 68 entre la position de fermeture et la position d'ouverture, et le support 64 du contact mobile 14 est articulé sur un deuxième axe 66 de la cage 62.

Lors de la fermeture des contacts 12, 14, dans un premier temps, l'arbre des pôles 20 est donc mis en rotation, et le mécanisme à genouillère entraîne directement le bras de contact 16 ; à la fermeture, les deux pastilles des contacts 12, 14 se mettent en contact. L'arbre 20 peut alors poursuivre sa course, et le mouvement de la cage de pôles 62 du bras 16 continue au-delà de la position d'accostage, le contact mobile 14 « s'enfonçant » à l'intérieur de la cage de pôles 62.

Par ailleurs, dans le mode de réalisation illustré, le système à genouillère 24, 26 relié à l'arbre des pôles déporté 20 permet une démultiplication des déplacements. La course en rotation de l'arbre des pôles 20 se poursuit sur un angle important θ₂ après la fermeture des pôles. En particulier, la course totale θ_{final} de l'arbre des pôles 20, fixe et déterminée par la conception de l'appareil, est de l'ordre de 50 à 55°. A mi-rotation de l'arbre 20, le contact mobile 14 a déjà parcouru ¾ de sa course, et l'ouverture des contacts n'est que de 10 mm ; ainsi, lors de l'accostage des contacts 12, 14 et après une course θ₁, il reste à l'arbre 20 de préférence encore environ 30 % de sa rotation à effectuer.

Selon l'invention, un capteur 70 mesure la rotation de l'arbre des pôles 20 entre le début du mouvement de l'arbre des pôles 20, et la fin de course dudit arbre 20. La fin de course de l'arbre des pôles 20 correspond à la position fermée des contacts électriques. Le capteur 70 mesure aussi la rotation θ de l'arbre des pôles 20 entre l'instant d'accostage entre contacts mobiles et fixes 12, 14, c'est-à-dire le début du passage de courant dans le dispositif 10, et la fin de course de l'arbre 20 en position fermée.

Le procédé d'évaluation des performances mécaniques d'un appareil de coupure selon l'invention comporte les étapes successives suivantes.

Une première étape consiste à mesurer l'angle de rotation θ de l'axe des pôles 20 pendant la durée de fermeture des contacts 12, 14 mobiles par le mécanisme d'entrainement 22.

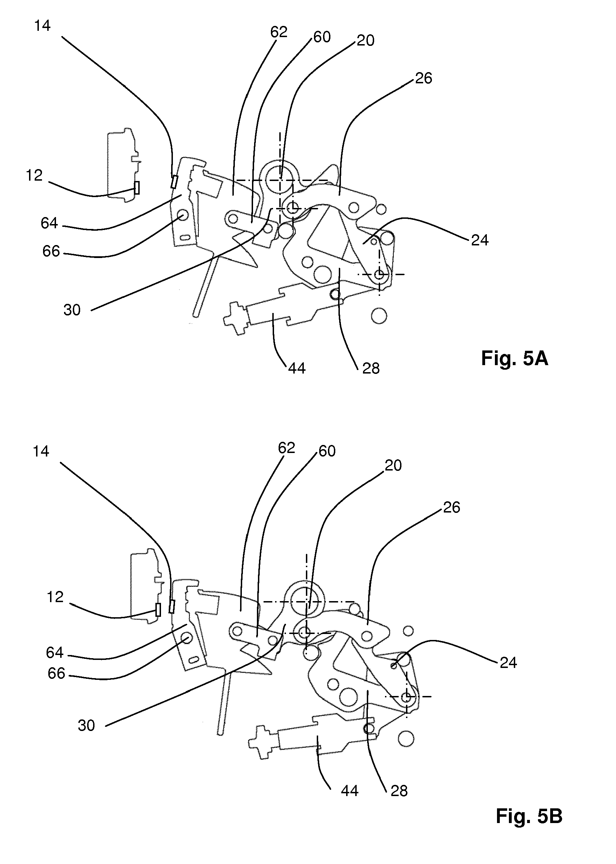

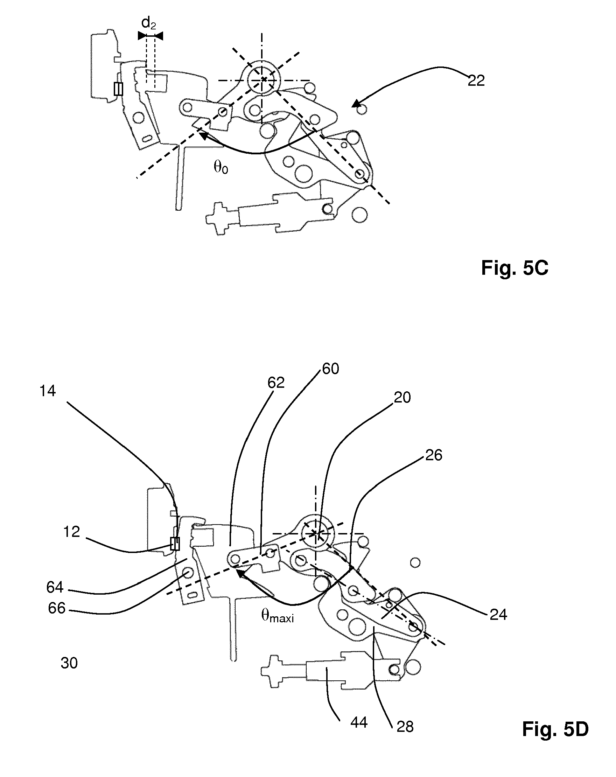

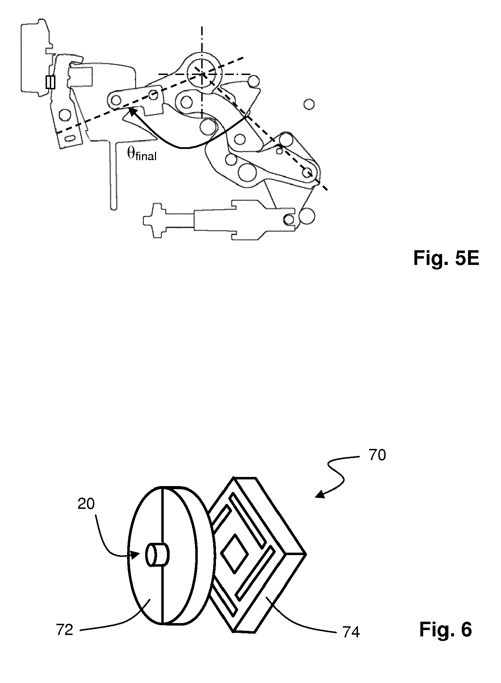

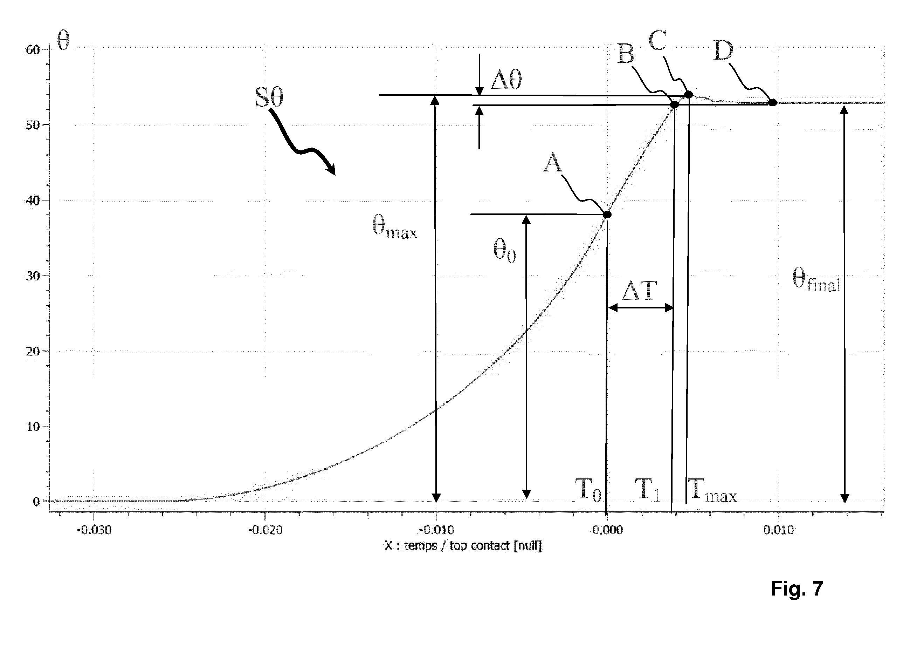

Une seconde étape consiste à reconstituer à partir des mesures réalisées à l'étape précédente au moins deux valeurs spécifiques. Selon un mode préférentiel de réalisation de l'invention, le procédé consiste à déterminer une première valeur spécifique égale à un premier temps T₀ nécessaire pour atteindre un premier point d'inflexion A sur une courbe d'évolution Se de l'angle de rotation θ (figure 7). Ledit point d'inflexion correspond au moment où l'arbre des pôles 20 atteint une vitesse maximale de rotation. Comme représenté sur la figure 7, l'arbre des pôles 20 a effectué une rotation d'un angle θ₀. Comme représenté sur la figure 5C, le premier point d'inflexion A correspond aussi au moment où les contacts électriques 12, 14 rentrent en contact.

L'évolution de la valeur de l'angle au moment où les contacts électriques 12, 14 rentrent en contact donne une indication sur l'usure de l'appareil de coupure. En effet, les manoeuvres de l'appareil à vide ou en charge provoquent une usure des pastilles de contact, qu'elles soient fixes ou mobiles. L'enlèvement et l'écrasement de matière qui en résulte retarde l'entrée en contact des pôles et peut induire une augmentation de la valeur premier temps T₀.

Le procédé consiste à déterminer une seconde valeur spécifique égale à un second temps T₁ nécessaire pour atteindre un second point B sur la courbe d'évolution Se de l'angle de rotation θ. Ledit second point correspond à un angle de rotation théorique final θ_{final} atteint lorsque la paire de contacts principaux 12, 14 mobiles est dans une position fermée. Cette valeur de référence théorique de l'angle de rotation final est de préférence une caractéristique produit rattachée au dispositif de coupure. Cette caractéristique est alors fournie par le constructeur. Cette valeur de référence peut aussi être estimée suite à une séquence de mesures effectuées lorsque l'appareil est neuf. La valeur de référence est enregistrée pour être par la suite utilisée dans le procédé suivant l'invention.

Une troisième étape du procédé consiste à comparer lesdites valeurs spécifiques à des valeurs théoriques extraites d'un gabarit de fonctionnement initial spécifique de dispositif de coupure. Selon un mode préférentiel, le procédé consiste à calculer le temps écoulé ΔT entre le premier et second temps T₀, T₁. Ce temps écoulé entre le premier et second temps T₀, T₁ est ensuite comparé à une valeur de référence représentative d'un fonctionnement d'un appareil de coupure non usé.

Cette valeur de référence est établie en fonction de la configuration « mécanique » de l'appareil de coupure : nombre de pôles, ressorts de la grenade, et enregistré dans le module de traitement de l'information pour être exploité et comparé en fonction de la constitution de l'appareil de coupure. Cette valeur de référence est de préférence une caractéristique produit rattachée au dispositif de coupure. Cette caractéristique est alors fournie par le constructeur. Cette valeur de référence peut aussi être estimée suite à une séquence de mesure effectuée lorsque l'appareil est neuf. La valeur de référence est enregistrée pour être par la suite utilisée dans le procédé suivant l'invention.

Une dernière étape du procédé d'évaluation des performances mécaniques d'un appareil de protection consiste à diagnostiquer certaines performances mécaniques d'usure du mécanisme d'entraînement 22 en fonction d'un état comparatif entre les valeurs spécifiques déterminées et celles de références issues du gabarit de fonctionnement. Selon un mode préférentiel, le procédé selon l'invention consiste à diagnostiquer un niveau d'énergie excédentaire du système accumulateur d'énergie du mécanisme d'entraînement 22 en fonction de la différence entre la valeur du temps écoulé calculé par rapport à la valeur référence théorique.

Autrement dit, l'ultime étape du procédé selon l'invention nous renseigne sur la réserve d'énergie disponible dans la grenade pour assurer la fermeture : l'énergie excédentaire. Si les efforts résistants viennent à augmenter, cette réserve d'énergie diminue et la course angulaire de l'arbre des pôles 20 à partir du moment où les contacts électriques 12, 14 rentrent en contact (point d'inflexion A) est de plus en plus ralentie. La différence ΔT entre la valeur du temps écoulé calculé par rapport à la valeur de référence tend aussi à augmenter avec l'usure du dispositif de coupure au cours de son utilisation.

Selon un mode particulier de réalisation de l'invention, le procédé d'évaluation consiste à déterminer une troisième valeur spécifique C sur une courbe d'évolution Se de l'angle de rotation θ correspondant à un temps Tₘₐₓ pour atteindre un premier maximum local C sur la courbe d'évolution S_{θ}. Comme représenté sur la figure 5D, ledit premier maximum local C correspondant à l'angle de rotation θₘₐₓᵢ maximal atteint par l'arbre des pôles 20 au cours de la fermeture.

Cette étape correspond au passage du point mort haut du dispositif à genouillère 26, 24 du mécanisme d'entraînement 22. Après cette étape, ce n'est plus le levier entraineur 40 qui pousse le mécanisme d'entraînement 22, mais les ressorts de pôles 67 qui, par retour d'effort, amène le dispositif à genouillère 26, 24 en appui sur le crochet de déclenchement 28. Une évolution de la valeur de l'angle de rotation θₘₐₓᵢ maximal nous donne une indication de l'usure du mécanisme d'entraînement 22.

Le procédé, selon ce mode particulier de réalisation, consiste ensuite à déterminer une quatrième valeur spécifique (point D) sur la courbe d'évolution Se Cette quatrième valeur spécifique (point D) correspond à un angle de rotation mesuré final θ_{final} atteint lorsque la paire de contacts principaux 12, 14 mobiles est dans une position fermée.

Dans une étape suivante, la différence angulaire Δθ entre l'angle de rotation θₘₐₓᵢ maximal et angle de rotation mesuré final θ_{final} est calculée. La détermination de cette différence angulaire permet de diagnostiquer un état de verrouillage d'un dispositif à genouillère 26, 24 du mécanisme d'entraînement 22. En effet, si la différence angulaire Δθ calculée est supérieure à un seuil, autrement dit si l'angle de rotation θₘₐₓᵢ maximal est supérieur à l'angle de rotation final mesuré θ_{final} alors le dispositif à genouillère 26, 24 est verrouillé après avoir correctement franchi un point mort haut (figure 5D). Si la différence angulaire Δθ calculée est supérieure audit seuil de verrouillage, l'appareil de coupure se trouve dans un état fermé verrouillé. Le seuil de verrouillage correspond à une caractéristique fournie par le constructeur. Cette caractéristique correspondant au seuil de verrouillage peut aussi être estimée suite à une séquence de mesure effectuée lorsque l'appareil est neuf. La caractéristique est enregistrée pour être par la suite utilisée dans le procédé suivant l'invention.

A partir du moment où les contacts électriques 12, 14 rentrent en contact (premier point d'inflexion A), le mouvement du mécanisme d'entraînement 22 provoque la compression des ressorts de contacts 67 compris entre les cages de pôles 62 et les supports 64 des contacts mobiles 14. Cette compression, que l'on traduit par l'enfoncement de contact, conditionne l'effort de pression qui s'exercera sur les contacts électriques 12, 14 en position fermée. Cet effort de pression définie aussi la tenue électrodynamique de l'appareil de coupure.

Selon un premier mode de réalisation, le capteur 70 est de préférence localisé sur l'arbre des pôles 20 hors des zones susceptibles d'être polluées lors des coupures par des débris et loin des jets éventuels de gaz chauds. Les appareils de coupure 10 à forte tenue électrodynamique ont une durée de vie qui peut atteindre une trentaine d'année ; avantageusement, le capteur 70 est de type sans contact afin de limiter tout biais dû à une usure ou un frottement au sein du capteur 70.

Comme représenté sur les figures 3 et 4, le capteur de rotation 70 comprend une roue dentée 112 ou une portion de roue dentée disposée sur l'arbre des pôles 20. Dans un autre mode de réalisation non représenté, la roue est constituée d'une succession de pôles magnétiques. Des moyens de détection 114 tels que des dispositifs microélectroniques mettant en oeuvre des éléments sensibles de type inductif, des cellules à effet hall, ou cellules à magnéto résistance, sont mis en place sur le boîtier de l'appareil de coupure 10, en vis-à-vis de la roue dentée ou des pôles magnétiques. La roue dentée 112 et les moyens de détection 114 communiquent sans contact. De préférence, les moyens de détection 114 incorporent des procédés numériques de traitement des signaux analogiques générés par le passage des dents de la roue dentée ou le passage des pôles magnétiques, pour en donner une transcription numérique sous la forme de deux signaux carrés décalé d'un quart de période. Dans certain type de réalisation les moyens de détection peuvent intégrer des fonctions d'interpolation des signaux analogiques.

Selon un second mode particulier de réalisation non représenté, le capteur 70, de faible volume, est de préférence localisé en bout de barreau 20, par exemple à une extrémité proche du boîtier de l'appareil de coupure 10. En particulier, un capteur de type magnétique sans contact glissant, notamment à réseau (ou *« magnetic array type rotation sensor »* selon la terminologie anglo-saxonne), est notamment adapté grâce à son absence de pièces susceptibles de se dégrader rapidement. Tel qu'illustré en figure 6, ce type de capteur 70 comprend des moyens magnétiques 72, notamment un aimant, qu'il est possible de solidariser à l'élément dont on veut déterminer la rotation ; en particulier, l'aimant 72 peut être directement couplé sur le barreau des pôles 20 par collage à son extrémité, ou tout autre moyen mécanique. Le capteur 70 comprend par ailleurs des moyens de détection 74, et notamment un détecteur de type carte de circuit imprimé d'environ 4 mm de côté ; le détecteur 74 est positionné face aux moyens magnétiques 72, par exemple couplé au boîtier de l'appareil de coupure 10, notamment mis en place dans un logement adapté. Le détecteur 74 est relié de façon classique à des moyens de traitement des informations et de présentation des résultats, par exemple un module électronique déjà présent sur l'appareil de coupure 10 auquel est ajoutée une nouvelle fonction. Avantageusement, le capteur 70 est tel que décrit dans les documents EP 1 830 162 ou EP 1 921 423, avec une résolution angulaire de l'ordre de 0,2 à 0,5°.

Selon le mode particulier du procédé, l'estimation de l'enfoncement de contact se fait par la différence entre l'angle θ_{final} final et l'angle de rotation de l'arbre de rotation au moment où les contacts entrent en contact à l'instant T₀.

Bien que l'invention ait été décrite en référence à des contacts 12, 14 d'un appareil de coupure 10 à tenue électrodynamique élevée dans lequel le mécanisme d'ouverture implique une grande variation de la position angulaire du barreau de pôles 20 pour une faible variation de la sur-course d'écrasement, elle ne s'y limite pas : d'autres types d'appareils de coupure, contacteurs et/ou disjoncteurs, peuvent être concernés. Si le découplage des mouvements par double bielle et genouillère amplifie la différence angulaire selon que les contacts sont usés ou non, selon la course des contacts et selon la précision du dispositif de détection 70, il est possible d'appliquer le dispositif selon l'invention à d'autres mécanismes d'actionnement comprenant une partie rotative.

Selon une variante de réalisation de l'invention non représentée, un capteur mesure la rotation de la cage de pôles 62 entre le début du mouvement de l'arbre des pôles 20, et la fin de course dudit arbre 20. La fin de course de l'arbre des pôles 20 correspond à la position fermée des contacts électriques.

## Revendications

1. Procédé d'évaluation des performances mécaniques d'un appareil de coupure comprenant au moins un pôle, chaque pôle comprenant :
- une paire de contacts (12, 14) mobiles l'un par rapport à l'autre entre une position ouverte et une position fermée ;
- un bras de support (16) d'un premier contact (14) ;
- un mécanisme d'entraînement (22) du bras de support (16) comprenant :
- un arbre des pôles (20) rotatif et au moins une tringle (60) qui couplent de façon pivotante le mécanisme d'entrainement (22) au bras de support (16),
- un système accumulateur d'énergie apte à entrainer un déplacement dudit bras pour placer les contacts (12, 14) dans une position fermée ;
procédé, **caractérisé en ce qu'**il consiste à :
- mesurer l'angle de rotation (θ) de l'arbre des pôles (20) pendant une durée de fermeture des contacts (12, 14) ;
- déterminer une première valeur spécifique égale à un premier temps (T₀) nécessaire pour atteindre un premier point d'inflexion (A) sur une courbe d'évolution (Se) de l'angle de rotation (θ), ledit point d'inflexion correspondant au moment où l'arbre des pôles (20) atteint une vitesse maximale de rotation ;
- déterminer une seconde valeur spécifique égale à un second temps (T₁) nécessaire pour atteindre un point (B) sur la courbe d'évolution (S_{θ}) de l'angle de rotation (θ), correspondant à un angle de rotation final (θ_{final}) théorique atteint lorsque la paire de contacts (12, 14) est dans une position fermée ;
- comparer lesdites valeurs spécifiques à un gabarit de fonctionnement initial spécifique de dispositif de coupure ;
- diagnostiquer les performances mécaniques d'usure du mécanisme d'entraînement (22) en fonction d'un état comparatif entre les valeurs spécifiques obtenues et celles du gabarit de fonctionnement.

2. Procédé d'évaluation selon la revendication 1 **caractérisé en ce qu'**il consiste à :
- calculer le temps écoulé entre le premier et second temps (T₀, T₁) ;
- diagnostiquer un niveau d'énergie excédentaire du système accumulateur d'énergie du mécanisme d'entraînement (22) en fonction de la différence entre la valeur du temps écoulé calculée et à une valeur théorique.

3. Appareil de coupure pour la mise en oeuvre du procédé selon les revendications précédentes et comprenant :
- une paire de contacts (12, 14) mobiles l'un par rapport à l'autre entre une position ouverte et une position fermée ;
- un bras de support (16) d'un premier contact (14) ;
- un mécanisme d'entraînement (22) du bras de support (16) comprenant :
- un arbre des pôles (20) rotatif et au moins une tringle (60) qui couplent de façon pivotante le mécanisme d'entrainement (22) au bras de support (16),
- un système accumulateur d'énergie apte à entraîner un déplacement dudit bras pour placer les contacts principaux (12, 14) dans une position fermée ;
- une pluralité de pôles identiques et un arbre des pôles (20) commun à tous les pôles, l'arbre des pôles (20) étant l'axe rotatif des mécanismes d'entraînement (22).
appareil, **caractérisé en ce qu'**il comprend :
- des moyens pour mesurer l'angle de rotation (θ) de l'arbre des pôles (20) pendant une durée de fermeture des contacts (12, 14) ;
- des moyens pour reconstituer à partir des mesures au moins deux valeurs spécifiques en procédant selon les étapes suivantes :
- détermination d'une première valeur spécifique égale à un premier temps (T0) nécessaire pour atteindre un premier point d'inflexion (A) sur une courbe d'évolution (Sθ) de l'angle de rotation (θ), ledit point d'inflexion correspondant au moment où l'arbre des pôles (20) atteint une vitesse maximale de rotation ;
- détermination d'une seconde valeur spécifique égale à un second temps (T1) nécessaire pour atteindre un point (B) sur la courbe d'évolution (Sθ) de l'angle de rotation (θ), correspondant à un angle de rotation final (θfinal) théorique atteint lorsque la paire de contacts (12, 14) est dans une position fermée ;
- des moyens pour comparer lesdites valeurs spécifiques à un gabarit de fonctionnement initial spécifique de dispositif de coupure ;
- des moyens pour diagnostiquer les performances mécaniques d'usure du mécanisme d'entraînement (22) en fonction d'un état comparatif entre les valeurs spécifiques obtenues et celles du gabarit de fonctionnement.

4. Appareil de coupure selon la revendication 3, **caractérisé en ce que** le bras de support (16) d'un premier contact (14) comprend une première partie (64) portant le premier contact (14) et une deuxième partie (62), les deux parties coulissant l'une par rapport à l'autre de sorte que, en position fermée de la paire de contacts (12, 14), la deuxième partie (62) puisse prendre une première position d'accostage et une deuxième position de fin de course dans laquelle la première partie (64) est enfoncée dans la deuxième partie (62).

5. Appareil de coupure selon l'une des revendications 3 ou 4, **caractérisé en ce que** le mécanisme d'entraînement (22) de l'arbre des pôles (20) comporte un dispositif à genouillère (26, 24) associé à un crochet de déclenchement (28) et à un ressort d'ouverture (32) pour déplacer le bras de support (16) du contact mobile (14), le dispositif comporte deux bielles (24, 26).

6. Appareil de coupure selon l'une quelconque des revendications 3 à 5, **caractérisé en ce que** le mécanisme d'entraînement (22) de l'arbre des pôles (20) comporte un dispositif de réarmement (44) ayant un système accumulateur d'énergie à dispositif élastique (44) comprenant au moins un ressort de fermeture pour déplacer le contact mobile vers la position de fermeture, l'armement du ressort de fermeture étant opéré par une came de réarmement (48) entraînée en rotation au moyen d'un levier manuel ou d'un servomoteur

7. Appareil de coupure selon l'une quelconque des revendications 3 à 6, **caractérisé en ce qu'**il comporte des moyens de détermination (70) de l'angle de rotation de l'arbre des pole (20), lesdits moyens comprenant un capteur de rotation dont un composant est disposé sur l'arbre des pôles (20).

8. Appareil de coupure selon la revendication 7, **caractérisé en ce que** le capteur de rotation (70) comprend des moyens magnétiques (72) disposés sur l'axe de rotation (20) et des moyens de détection (74) mis en place sur le boîtier de l'appareil de coupure (10), les moyens magnétiques (72) et de détection (74) communiquant sans contact.

9. Appareil de coupure selon la revendication 7, **caractérisé en ce que** le capteur de rotation (70) comprend une roue dentée (112) disposés sur l'axe de rotation (20) et des moyens de détection (114) mis en place sur le boîtier de l'appareil de coupure (10), la roue dentée (112) et moyens de détection (114) communiquant sans contact.

## Patentansprüche

1. Verfahren zur Auswertung der mechanischen Leistungen eines Schneidgeräts, welches mindestens einen Pol aufweist, wobei jeder Pol Folgendes aufweist:
- ein Paar von Kontakten (12, 14), welche zwischen einer offenen Position und einer geschlossenen Position zueinander beweglich sind;
- einen Arm zum Tragen (16) eines ersten Kontakts (14);
- einen Mechanismus zum Antrieb (22) des Tragarms (16), aufweisend:
- eine drehbare Welle der Pole (20) und mindestens eine Stange (60), welche auf drehende Weise den Antriebsmechanismus (22) an den Tragarm (16) koppeln,
- ein Energiespeichersystem, welches geeignet ist, eine Verlagerung des Arms zu veranlassen, um die Kontakte (12, 14) in eine geschlossene Position zu bringen;
wobei das Verfahren **dadurch gekennzeichnet ist, dass** es aus folgenden Schritten besteht:
- Messen des Drehwinkels (θ) der Welle der Pole (20) während einer Schließdauer der Kontakte (12, 14);
- Bestimmen eines ersten spezifischen Wertes, der gleich einer ersten Zeit (T₀) ist, welche notwendig ist, um einen ersten Wendepunkt (A) auf einer Verlaufskurve (S_{θ}) des Drehwinkels (θ) zu erreichen, wobei der Wendepunkt dem Moment entspricht, in dem die Welle der Pole (20) eine maximale Drehgeschwindigkeit erreicht;
- Bestimmen eines zweiten spezifischen Wertes, der gleich einer zweiten Zeit (T₁) ist, welche notwendig ist, um einen Punkt (B) auf der Verlaufskurve (S_{θ}) des Drehwinkels (θ) zu erreichen, welcher einem theoretischen Enddrehwinkel (θ_{final}) entspricht, welcher erreicht wird, wenn das Paar von Kontakten (12, 14) sich in einer geschlossenen Position befindet;
- Vergleichen der spezifischen Werte mit einer spezifischen, anfänglichen Betriebsvorgabe der Schneidevorrichtung;
- Diagnostizieren der mechanischen Leistungen von Verschleiß des Antriebsmechanismus (22) in Funktion von einem Vergleichsbericht zwischen den erzielten spezifischen Werten und jenen der Betriebsvorgabe.

2. Auswerteverfahren nach Anspruch 1, **dadurch gekennzeichnet, dass** es aus den folgenden Schritten besteht:
- Berechnen der zwischen der ersten und zweiten Zeit (T₀ ,T₁) abgelaufenen Zeit;
- Diagnostizieren des Energiespeichersystems des Antriebsmechanismus (22) im Bereich von überschüssiger Energie in Funktion der Differenz des Wertes der berechneten, abgelaufenen Zeit und eines theoretischen Wertes.

3. Schneidgerät zum Verwenden des Verfahrens nach den vorhergehenden Ansprüchen und aufweisend:
- ein Paar von Kontakten (12, 14), welche zwischen einer offenen Position und einer geschlossenen Position zueinander beweglich sind;
- einen Arm zum Tragen (16) eines ersten Kontakts (14);
- einen Mechanismus zum Antrieb (22) des Tragarms (16), aufweisend:
- eine drehbare Welle der Pole (20) und mindestens eine Stange (60), welche auf drehende Weise den Antriebsmechanismus (22) an den Tragarm (16) koppeln,
- ein Energiespeichersystem, welches geeignet ist, eine Verlagerung des Arms zu veranlassen, um die Hauptkontakte (12, 14) in eine geschlossene Position zu bringen;
- eine Vielzahl von identischen Polen und eine für alle Pole gemeinsame Welle der Pole (20), wobei die Welle der Pole (20) die Drehachse des Antriebsmechanismus (22) ist,
wobei das Gerät **dadurch gekennzeichnet ist, dass** es Folgendes aufweist:
- Mittel, um den Drehwinkel (θ) der Welle der Pole (20) während einer Schließdauer der Kontakte (12, 14) zu messen;
- Mittel, um ausgehend von den Messungen mindestens zwei spezifische Werte zu bilden, indem gemäß der folgenden Schritte vorgegangen wird:
- Bestimmung eines ersten spezifischen Wertes, der gleich einer ersten Zeit (T₀) ist, welche notwendig ist, um einen ersten Wendepunkt (A) auf einer Verlaufskurve (S_{θ}) des Drehwinkels (θ) zu erreichen, wobei der Wendepunkt dem Moment entspricht, in dem die Welle der Pole (20) eine maximale Drehgeschwindigkeit erreicht;
- Bestimmung eines zweiten spezifischen Wertes, der gleich einer zweiten Zeit (T₁) ist, welche notwendig ist, um einen Punkt (B) auf der Verlaufskurve (S_{θ}) des Drehwinkels (θ) zu erreichen, welcher einem theoretischen Enddrehwinkel (θ_{final}) entspricht, welcher erreicht wird, wenn das Paar von Kontakten (12, 14) sich in einer geschlossenen Position befindet;
- Mittel, um die spezifischen Werte mit einer spezifischen, anfänglichen Betriebsvorgabe der Schneidevorrichtung zu vergleichen;
- Mittel, um die mechanischen Leistungen von Verschleiß des Antriebsmechanismus (22) in Funktion von einem Vergleichsbericht zwischen den erzielten spezifischen Werten und jenen der Betriebsvorgabe zu diagnostizieren.

4. Schneidgerät nach Anspruch 3, **dadurch gekennzeichnet, dass** der Arm zum Tragen (16) eines ersten Kontakts (14) einen ersten, den ersten Kontakt (14) tragenden Teil (64) und einen zweiten Teil (62) aufweist, wobei die beiden Teile derartig in Bezug zueinander gleiten, dass in geschlossener Position der Paare von Kontakten (12, 14) der zweite Teil (62) eine erste Anlegeposition und eine zweite Endposition einnehmen kann, in welcher der erste Teil (64) in den zweiten Teil (62) eingedrückt wird.

5. Schneidgerät nach einem der Ansprüche 3 oder 4, **dadurch gekennzeichnet, dass** der Antriebsmechanismus (22) der Welle der Pole (20) eine Kniehebelvorrichtung (26, 24) aufweist, die einem Auslösehaken (28) und einer Öffnungsfeder (32) zugeordnet ist, um den Arm zum Tragen (16) des beweglichen Kontakts (14) zu bewegen, wobei die Vorrichtung zwei Hebel (24, 26) aufweist.

6. Schneidgerät nach einem der Ansprüche 3 bis 5, **dadurch gekennzeichnet, dass** der Antriebsmechanismus (22) der Welle der Pole (20) eine Wiedereinschaltvorrichtung (44) mit einem Energiespeichersystem mit elastischer Vorrichtung (44) aufweist, welches mindestens eine Schließfeder aufweist, um den beweglichen Kontakt in die Schließposition zu bewegen, wobei das Spannen der Schließfeder durch eine Nocke zum Wiedereinschalten (48) vorgenommen wird, welche mittels eines manuellen Hebels oder eines Servomotors in Drehung versetzt wird.

7. Schneidgerät nach einem der Ansprüche 3 bis 6, **dadurch gekennzeichnet, dass** es Mittel zur Bestimmung (70) des Drehwinkels der Welle der Pole (20) aufweist, wobei die Mittel einen Drehsensor aufweisen, dessen eine Komponente auf der Welle der Pole (20) angeordnet ist.

8. Schneidgerät nach Anspruch 7, **dadurch gekennzeichnet, dass** der Drehsensor (70) magnetische Mittel (72), welche auf der Drehachse (20) angeordnet sind, und Erfassungsmittel (74) aufweist, welche am Gehäuse des Schneidgeräts (10) angeordnet sind, wobei die magnetischen Mittel (72) und Erfassungsmittel (74) kontaktlos kommunizieren.

9. Schneidgerät nach Anspruch 7, **dadurch gekennzeichnet, dass** der Drehsensor (70) ein Zahnrad (112), welches auf der Drehachse (20) angeordnet ist, und Erfassungsmittel (114) aufweist, welche am Gehäuse des Schneidgeräts (10) angeordnet sind, wobei das Zahnrad (112) und die Erfassungsmittel (114) kontaktlos kommunizieren.

## Claims

1. Method for assessing the mechanical performance levels of a switching device comprising at least one pole, each pole comprising:
- a pair of contacts (12, 14) that are mobile relative to one another between an open position and a closed position;
- a support arm (16) of a first contact (14);
- a driving mechanism (22) for driving the support arm (16) comprising:
- a rotary shaft of the poles (20) and at least one rod (60) which pivotingly couple the driving mechanism (22) to the support arm (16),
- an energy accumulator system capable of driving a displacement of said arm to place the contacts (12, 14) in a closed position;
method, **characterized in that** it consists in:
- measuring the angle of rotation (θ) of the shaft of the poles (20) for a duration of closure of the contacts (12, 14);
- determining a first specific value equal to a first time (T₀) necessary to reach a first point of inflection (A) on a curve of change (S_{θ}) of the angle of rotation (θ), said point of inflection corresponding to the moment when the shaft of the poles (20) reaches a maximum rotation speed;
- determining a second specific value equal to a second time (T₁) necessary to reach a point (B) on the curve of change (S_{θ}) of the rotation angle (θ), corresponding to a theoretical final rotation angle (θ_{final}) reached when the pair of contacts (12, 14) is in a closed position;
- comparing said specific values to a switching device-specific initial operation template;
- diagnosing the mechanical wear performance levels of the driving mechanism (22) according to a comparative state between the specific values obtained and those of the operation template.

2. Assessment method according to Claim 1, **characterized in that** it consists in:
- calculating the elapsed time between the first and second times (T₀, T₁);
- diagnosing an excess energy level of the energy accumulator system of the driving mechanism (22) as a function of the difference between a calculated elapsed time value and a theoretical value.

3. Switching device for the implementation of the method according to the preceding claims and comprising:
- a pair of contacts (12, 14) that are mobile relative to one another between an open position and a closed position;
- a support arm (16) of a first contact (14);
- a driving mechanism (22) for driving the support arm (16) comprising:
- a rotary shaft of the poles (20) and at least one rod (60) which pivotingly couple the driving mechanism (22) to the support arm (16),
- an energy accumulator system capable of driving a displacement of said arm to place the main contacts (12, 14) in a closed position;
- a plurality of identical poles and a shaft of the poles (20) common to all the poles, the shaft of the poles (20) being the rotary axis of the driving mechanism (22),
apparatus, **characterized in that** it comprises:
- means for measuring the rotation angle (θ) of the shaft of the poles (20) for a duration of closure of the contacts (12, 14);
- means for reconstructing, from the measurements, at least two specific values by proceeding according to the following steps:
- determination of a first specific value equal to a first time (T0) necessary to reach a first point of inflection (A) on a curve of change (S_{θ}) of the rotation angle (θ), said point of inflection corresponding to the moment when the shaft of the poles (20) reaches a maximum rotation speed;
- determination of a second specific value equal to a second time (T1) necessary to reach a point (B) on the curve of change (S_{θ}) of the rotation angle (θ), corresponding to a theoretical final rotation angle (θfinal) reached when the pair of contacts (12, 14) is in a closed position;
- means for comparing said specific values to a switching device-specific initial operation template;
- means for diagnosing the mechanical wear performance levels of the driving mechanism (22) as a function of a comparative state between the specific values obtained and those of the operation template.

4. Switching device according to Claim 3, **characterized in that** the support arm (16) of a first contact (14) comprises a first part (64) bearing the first contact (14) and a second part (62), the two parts sliding relative to one another such that, in the closed position of the pair of contacts (12, 14), the second part (62) can assume a first docking position and a second end-of-travel position in which the first part (64) is driven into the second part (62).

5. Switching device according to one of Claims 3 or 4, **characterized in that** the driving mechanism (22) of the shaft of the poles (20) comprises a catch device (26, 24) associated with a trip hook (28) and with an opening spring (32) for displacing the support arm (16) of the mobile contact (14), the device comprises two connecting rods (24, 26).

6. Switching device according to any one of Claims 3 to 5, **characterized in that** the driving mechanism (22) of the shaft of the poles (20) comprises a rearming device (44) having an energy accumulator system with elastic device (44) comprising at least one closure spring for displacing the mobile contact to the position of closure, the arming of the closure spring being done by a rearming cam (48) driving in rotation by means of a manual lever or a servomotor.

7. Switching device according to any one of Claims 3 to 6, **characterized in that** it comprises means for determining (70) the rotation angle of the shaft of the poles (20), said means comprising a rotation sensor of which one component is disposed on the shaft of the poles (20).

8. Switching device according to Claim 7, **characterized in that** the rotation sensor (70) comprises magnetic means (72) disposed on the rotation axis (20) and detection means (74) placed on the housing of the switching device (10), the magnetic (72) and detection (74) means communicating without contact.

9. Switching device according to Claim 7, **characterized in that** the rotation sensor (70) comprises a toothed wheel (112) disposed on the rotation axis (20) and detection means (114) placed on the housing of the switching device (10), the toothed wheel (112) and detection means (114) communicating without contact.
